# EUROPÄISCHE PATENTSCHRIFT

(11) **EP 3 793 066 B1**
(45) Veröffentlichungstag und Bekanntmachung des Hinweises auf die Patenterteilung: **15.04.2026**
(21) Anmeldenummer: 20190677.3
(22) Anmeldetag: 12.08.2020
(51) Int. Cl.: H02K 1/28, H02K 7/00, H02K 1/276

(54) **ROTORBLECH FÜR EINEN ROTOR EINES ELEKTROMOTORS, ROTOR FÜR EINEN ELEKTROMOTOR UND ELEKTROMOTOR**
ROTOR PLATE FOR A ROTOR OF AN ELECTRIC MOTOR, ROTOR FOR AN ELECTRIC MOTOR AND ELECTRIC MOTOR
TÔLE DE ROTOR POUR UN ROTOR D'UN MOTEUR ÉLECTRIQUE, ROTOR POUR UN MOTEUR ÉLECTRIQUE ET MOTEUR ÉLECTRIQUE

(30) Priorität: 13.09.2019 DE 102019124721
(43) Veröffentlichungstag der Anmeldung: 17.03.2021
(73) Patentinhaber: Metabowerke GmbH, 72622 Nürtingen (DE)
(72) Erfinder: Flöte, Enrico, 70599 Stuttgart (DE)
(74) Vertreter: Schmid, Wolfgang

(56) Entgegenhaltungen:
- EP-A1- 0 299 100
- WO-A1-2006/064860
- DE-A1- 102007 000 213
- DE-A1- 102012 012 624
- JP-A- H0 993 878
- US-A1- 2016 352 165
- US-A1- 2019 181 727

## Beschreibung

Die Erfindung betrifft einen Rotor für einen Elektromotor nach der im Oberbegriff von Anspruch 1 näher definierten Art. Des Weiteren betrifft die Erfindung einen Elektromotor mit einem Stator und einem Rotor.

Aus der EP 0 299 100 A1 ist ein gattungsgemäßer Rotor für einen Elektromotor bekannt.

Die US 2016/0352165 A1 beschreibt ein Rotorpaket für einen Elektromotor.

Ein weiterer Rotor für einen Elektromotor, der ein aus mehreren Rotorblechen gebildetes Rotorpaket und eine in einer Bohrung des Rotorpakets montierte Rotorwelle aufweist, ist in der DE 10 2012 012 624 A1 beschrieben.

Ein Permanentmagnetmotor mit einem um eine Drehachse drehbaren Rotor mit mehreren in Aufnahmen eines aus axial gestapelten Blechlamellen zusammengesetzten Blechpakets angeordneten Permanentmagneten ist in der DE 10 2007 000 213 A1 beschrieben.

Aus der DE 295 00 984 U1 ist ein elektromotorischer Verstellantrieb für ein Getriebe bekannt, bei der eine formschlüssige Anbindung eines Rotorblechpakets an eine eingespritzte Rotorwelle durch Formschluss-Vorsprünge erfolgt.

In der DE 10 2017 212 870 A1 ist ein Rotor für einen Elektromotor mit einem Rotorträger und einem Rotorpaket beschrieben, die mittels Passfedern miteinander verbunden sind.

Die WO 2015/048955 A2 beschreibt einen Rotor für einen Elektromotor, bei der eine Bohrung eines Hauptkörpers mehrere sich in die Bohrung hinein erstreckende Vorsprünge aufweist.

Die WO 2006/064860 A1 beschreibt einen Elektromotor mit einem Stator und einem Rotor. Der Rotor weist eine Rotorwelle auf, die in einem Bereich, in dem ein aus Kunststoff bestehender Isolierkörper mit derselben verbunden ist, eine Rändelung aufweist.

Aus der US 2019/181727 A1 ist ein Elektromotor mit einer Rotorwelle bekannt, die ein Gewinde zur Anbringung eines Lüfters aufweist.

Die JP H09 93878 A beschreibt einen Rotor für einen Elektromotor, der schräg zu der Längsachse verlaufende Erhöhungen und Vertiefungen aufweist.

Sämtliche der bekannten Verbindungen der Rotorwelle mit dem Rotorblechpaket können jedoch nur ein begrenztes Drehmoment übertragen. Häufig wird, gerade bei mit Wechselstrom betriebenen Elektromotoren, zwischen der Rotorwelle und dem Rotorblechpaket eine Pressmasse angeordnet, die für eine elektrische Isolierung sorgen soll. Beim Aushärten kann diese Pressmasse jedoch schwinden, wodurch sich das von dem Rotorblechpaket auf die Rotorwelle übertragbare Drehmoment weiter verringert.

Es ist daher Aufgabe der vorliegenden Erfindung, einen Rotor für einen permanenterregten, mit Wechselstrom betriebenen Elektromotor zu schaffen, der eine möglichst gute Verbindung zwischen dem Rotorblech und der aufweist, um möglichst hohe Drehmomente übertragen zu können.

Erfindungsgemäß wird diese Aufgabe durch die in Anspruch 1 genannten Merkmale gelöst.

Mit diesem Rotor lassen sich sehr hohe Drehmomente übertragen und es ergeben sich sehr gute Werte hinsichtlich der Dauerhaltbarkeit desselben.

Durch die erfindungsgemäßen Ausnehmungen, die sich von der zur Aufnahme der Rotorwelle dienenden Bohrung in das Rotorblech hineinerstrecken, kann eine sehr gute Verbindung des Rotorblechpakets mit der Rotorwelle erreicht werden, so dass auf eine Rotorwelle, die mit einem aus mehreren erfindungsgemäßen Rotorblechen gebildeten Rotorblechpaket verbunden wird, sehr hohe Drehmomente übertragen werden können.

Dabei ergibt sich durch die unterschiedlich großen Steigungen, mit denen der an der von der Mitte der Bohrung entferntesten Stelle der Ausnehmungen vorgesehene Radius mit dem Umfang der Bohrung verbunden ist, in beiden möglichen Drehrichtungen der Rotorwelle eine gleichermaßen hohe Übertragung des Drehmoments.

Des Weiteren sind durch die erfindungsgemäße Ausgestaltung der Ausnehmungen Beschädigungen des Rotorblechs, die sich durch die Übertragung des Drehmoments auf die Rotorwelle ergeben könnten, zuverlässig vermeidbar.

Um die Eigenschaften des erfindungsgemäßen Rotorblechs für den Einsatz desselben bei unterschiedlichen Drehrichtungen noch weiter zu verbessern, ist außerdem vorgesehen, dass einige der Ausnehmungen im Uhrzeigersinn betrachtet auf der linken Seite eine größere Steigung aufweisen als auf der rechten Seite, und dass einige der Ausnehmungen im Uhrzeigersinn betrachtet auf der rechten Seite eine größere Steigung aufweisen als auf der linken Seite.

Dadurch, dass des Weiteren die Bohrung eine geradzahlige Anzahl an Ausnehmungen aufweist, kann eine noch bessere Anpassung des Rotorblechs an unterschiedliche Drehrichtungen erreicht werden.

Des Weiteren ist vorgesehen, dass die Ausnehmungen, die im Uhrzeigersinn betrachtet auf der linken Seite eine größere Steigung aufweisen als auf der rechten Seite, und die Ausnehmungen, die im Uhrzeigersinn betrachtet auf der rechten Seite eine größere Steigung aufweisen als auf der linken Seite, einander abwechselnd vorgesehen sind. Dies stellt im Hinblick auf die Umkehr der Drehrichtung des mit mehreren zu einem Rotorblechpaket verbundenen und mit einer Rotorwelle versehenen Rotorblechpakets ausgestatteten Elektromotor eine besonders vorteilhafte Ausführungsform dar.

Eine besonders gute Verbindung zwischen der Rotorwelle und dem Rotorblechpaket ergibt sich dadurch, dass die Rotorwelle schraubenartig um den Umfang derselben verlaufende Erhöhungen aufweist.

Des Weiteren ist zwischen der Rotorwelle und dem Rotorblechpaket ein Isoliermaterial angeordnet. Dadurch werden eventuelle Vibrationen verringert und es wird die elektrische Betriebssicherheit eines solchen Rotors gewährleistet.

Aus Anspruch 2 ergibt sich ein permanentmagneterregter, wechselstrombetriebener Elektromotor mit einem Stator und mit einem erfindungsgemäßen Rotor.

Ein solcher Elektromotor ist in der Lage, wesentlich höhere Drehmomente zu übertragen als dies bei bekannten Elektromotoren der Fall ist.

Ergänzend sei darauf hingewiesen, dass Begriffe, wie "umfassend" "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass hierfür erfinderisch tätig werden zu müssen.

Es zeigen schematisch:
- Figur 1: einen Schnitt durch einen erfindungsgemäßen Elektromotor mit einem Stator und einem Rotor;
- Figur 2: einen Schnitt nach der Linie II-II aus Fig. 1; und
- Figur 3: eine Vorderansicht eines erfindungsgemäßen Rotorblechs.

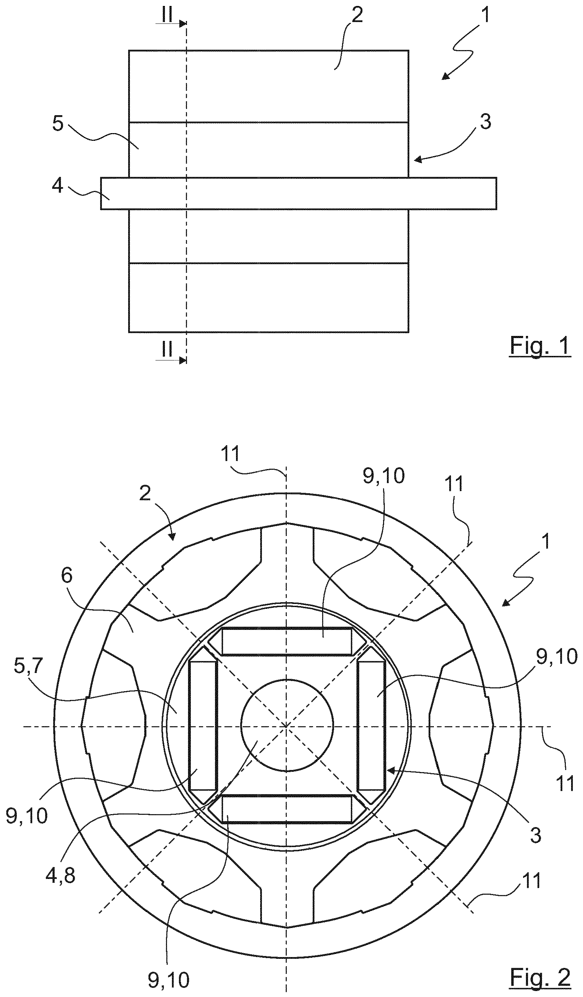

Figur 1 zeigt auf sehr schematische Art und Weise einen Elektromotor 1, der in an sich bekannter Weise einen Stator 2 und einen innerhalb des Stators 2 angeordneten Rotor 3 aufweist. Der Rotor 3 weist in ebenfalls an sich bekannter Weise eine Rotorwelle 4 und ein Rotorblechpaket 5 auf. Vorzugsweise handelt es sich bei dem Elektromotor 1 um einen Permanentmagnet erregten, wechselstrombetriebenen Elektromotor 1 bzw. einen Brushless-Motor. Allerdings kann es sich auch um einen mit Gleichstrom betriebenen Elektromotor 1 handeln.

Figur 2 zeigt einen Schnitt nach der Linie **II-II** aus Figur 1. Dabei sind ein Statorblech 6 und ein Rotorblech 7 dargestellt. Mehrere der Statorbleche 6 bilden zusammen mit einer nicht dargestellten Wicklung den Stator 2. **In** ähnlicher Weise bilden mehrere der Rotorbleche 7 das Rotorblechpaket 5. Zusammen mit der in einer zentralen Bohrung 8 des Rotorblechs 7 aufgenommenen Rotorwelle 4 und jeweiligen in Magnettaschen 9 des Rotorblechs 7 aufgenommenen Magneten 10 bilden die Rotorbleche 7 den Rotor 3.

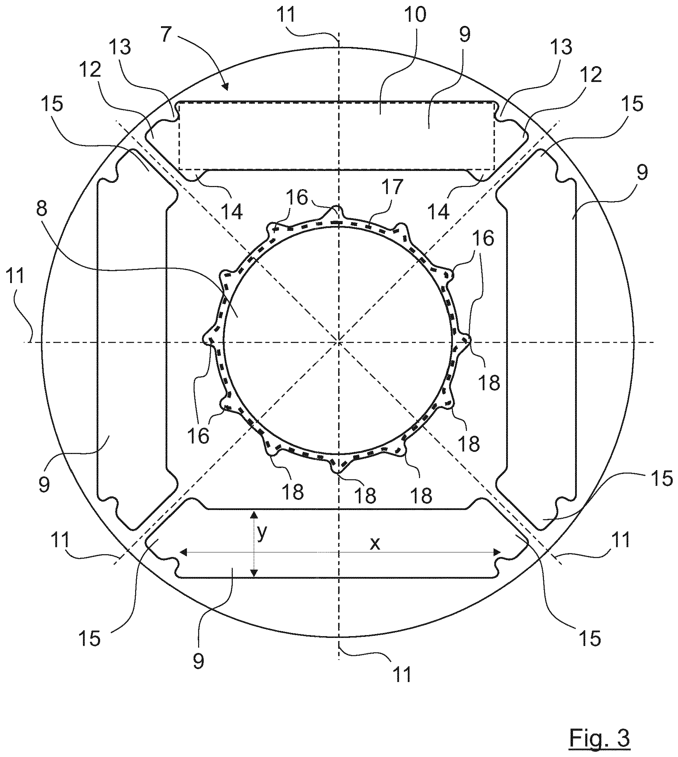

In Figur 3 ist eines der Rotorbleche 7 detailliert dargestellt. Es ist erkennbar, dass das Rotorblech 7 zumindest was den überwiegenden Teil seiner Merkmale anbelangt symmetrisch ausgebildet ist und mehrere in der Ebene, in der sich das Rotorblech 7 erstreckt, verlaufende Symmetrieachsen 11 aufweist. Des Weiteren ist erkennbar, dass das Rotorblech 7 vier um jeweils 90 Grad versetzt zueinander angeordnete Magnettaschen 9 aufweist. Grundsätzlich könnte auch eine andere Anzahl an Magnettaschen 9 vorgesehen sein, d.h. es könnte sich um eine andere mehrpolige Anordnung handeln, hinsichtlich einer optimalen Leistungsausbeute hat sich diese Anzahl an Magnettaschen 9 und darin angeordneten Magneten 10 als optimal erwiesen. Die exakte Auslegung der Anzahl und Anordnung der Magnettaschen 9 erfolgt im Allgemeinen in Abhängigkeit von der Drehzahlanforderung. Aus Gründen der Übersichtlichkeit ist in lediglich einer der Magnettaschen 9 einer der Magnete 10 mittels gestrichelter Linien angedeutet. Selbstverständlich sind bei dem Elektromotor 1 mit einem aus mehreren Rotorblechen 7 gebildeten Rotorblechpaket 5 in sämtlichen Magnettaschen 9 jeweilige Magnete 10 untergebracht. Die Magnete 10 sind jeweils abwechselnd mit ihrem Nordpol und mit ihrem Südpol nach außen gerichtet in den Magnettaschen 9 angeordnet.

Da, wie oben beschrieben, das Rotorblech 7 mehrere Symmetrieachsen 11 aufweist, sind sämtliche der Magnettaschen 9 im vorliegenden Fall identisch zueinander ausgebildet. Daher wird die spezifische Ausführung der Magnettaschen 9 nachfolgend lediglich in Bezug auf eine der Magnettaschen 9 beschrieben. Wiederum sind aus Gründen der Übersichtlichkeit nur bei einer der Magnettaschen 9 sämtliche Merkmale mittels Bezugszeichen bezeichnet.

Die Magnettasche 9 weist eine im Wesentlichen rechteckige Grundform mit einer im Wesentlichen senkrecht zu einer der Symmetrieachsen 11 des Rotorblechs 7 verlaufenden Quererstreckung x und einer in Richtung derselben Symmetrieachse 11 verlaufenden Höhenerstreckung y auf. Diese rechteckige Grundform der Magnettaschen 9 entspricht der rechteckigen Grundform der Magnete 10. Jedoch weist die Magnettasche 9 ihre Quererstreckung x beiderseits vergrößernde Ausnehmungen 12 auf, so dass seitlich der Magnete 10 freie Bereiche in den Magnettaschen 9 gebildet sind, die nicht von den Magneten 10 eingenommen werden. Die Ausnehmungen 12 bilden dabei eine Flusssperre. Die Ausnehmungen 12 weisen im vorliegenden Fall eine im Wesentlichen dreieckige Grundfläche auf, wobei die längste Seitenkante des Dreiecks an den Magnet 10 angrenzt.

In die Ausnehmungen 12 ragen beiderseits Anschlagelemente 13, die zur beiderseitigen Anlage des Magneten 10 dienen. Die Anschlagelemente 13 verkleinern damit die Fläche der Ausnehmungen 12 und somit die Fläche der Magnettasche 9. Es ist erkennbar, dass die Anschlagelemente 13 jeweils an den dem äußeren Umfang des Rotorblechs 7 zugewandten Seiten der Ausnehmungen 12 angeordnet sind. Mit anderen Worten, die Anschlagelemente 13 erstrecken sich von dem äußeren Umfang des Rotorblechs 7 nach innen, um so in die Ausnehmungen 12 hinein zu ragen.

Der Abstand der beiden Anschlagelemente 13 in Richtung der Quererstreckung x der Magnettaschen 9 ist geringfügig größer, beispielsweise 0,1 - 0,5 mm, insbesondere 0,2 - 0,4 mm, als die Ausdehnung der Magnete 10 in Richtung der Quererstreckung x, d. h. als die Breite der Magnete 10. Dies gewährleistet eine einfache Montage der Magnete 10 in den Magnettaschen 9.

Des Weiteren weist die Magnettasche 9 an ihrer dem äußeren Umfang des Rotorblechs 7 abgewandten Seite, also an der der Bohrung 8 für die Rotorwelle 4 zugewandten Seite, jeweilige an die Ausnehmungen 12 angrenzende, die Fläche der Magnettaschen 9 vergrößernde Aussparungen 14 auf. Es ist erkennbar, dass die Aussparungen 14, ähnlich wie die Ausnehmungen 12, zu einer zusätzlichen Abweichung der Fläche der Magnettasche 9 von der grundsätzlich rechteckigen Grundfläche beitragen. Die Magnete 10 erstrecken sich somit nicht in die Aussparungen 14.

Die Aussparungen 14 verkleinern die Fläche des Rotorblechs 7 in dem Bereich eines sich zwischen zwei benachbarten Magneten 10 befindenden Stegs 15 und sorgen so für den gewünschten Verlauf des Magnetflusses. Des Weiteren werden Kurschlussströmungen von gleichen Polen der Magnete 10 verhindert. Die von den Ausnehmungen 12 gebildete Flusssperre wird durch die Aussparungen 14 vergrößert bzw. verstärkt.

Die Aussparungen 14 weisen im vorliegenden Fall eine im Wesentlichen dreieckige Grundfläche auf, wobei eine dem äußeren Umfang des Rotorblechs 7 abgewandte Spitze der dreieckigen Grundfläche der Aussparung 14 abgerundet ist. Des Weiteren ist erkennbar, dass eine gerade Außenkante der Aussparung 14 mit einer geraden Außenkante der der Aussparung 14 zugeordneten Ausnehmung 12 fluchtet, d. h. dass die Aussparung 14 in diesem Bereich die Ausnehmung 12 fortsetzt.

Dabei können die Anschlagelemente 13 sich so weit in die Ausnehmung 12 hinein erstrecken, dass der Magnet 10 in dem Bereich, in dem die gerade Außenkante der Ausnehmung 12 in die gerade Außenkante der Aussparung 14 übergeht, anliegt.

Der nicht von dem Magnet 10 eingenommen Raum innerhalb der Magnettasche 9, insbesondere also der Bereich der beidseitigen Ausnehmungen 12 und der beidseitigen Aussparungen 14, kann mit einem nicht dargestellten Vergussmaterial vergossen sein, so dass die Magnete 10 sicher in dem durch die Rotorbleche 7 gebildeten Rotorblechpaket 5 gehalten sind.

Die Größe der Ausnehmungen 12 und der Aussparungen 14 hängt unter anderem von der Größe und der geometrischen Form der Magnettasche 9 sowie von der gewünschten Wirkung der dadurch gebildeten Flusssperren ab.

In Figur 3 ist außerdem zu erkennen, dass die Bohrung 8 des Rotorblechs 7 an ihrem Umfang mehrere Ausnehmungen 16 aufweist, die die Fläche der Bohrung 8 vergrößern und die zum Eingreifen von Vorsprüngen 17 der Rotorwelle 4 dienen. Dabei ist die Form der Vorsprünge 17 der Rotorwelle 4 an die nachfolgend ausführlich beschriebene Form der Ausnehmungen 16 der Bohrung 8 angepasst. Zwischen der Rotorwelle 4 und dem Rotorblechpaket 5 ist ein Isoliermaterial 18 angeordnet.

Die Ausnehmungen 16 sind hügelartig ausgebildet und weisen an ihrer von der Mitte der Bohrung 8 entferntesten Stelle einen Radius 19 auf. Die Übergänge von dem Radius 19 zu dem Umfang der Bohrung 8 weisen auf beiden Seiten der Ausnehmung 16 unterschiedliche Steigungen auf. Beispielsweise kann wenigstens einer der Übergänge von dem Radius 19 zu dem Umfang der Bohrung 8 mittels eines Radius gebildet sein. Alternativ oder zusätzlich kann wenigstens einer der Übergänge von dem Radius 19 zu dem Umfang der Bohrung 8 mittels einer Geraden gebildet sein. Selbstverständlich ist es auch möglich, dass einer der Übergänge von dem Radius 19 zu dem Umfang der Bohrung 8 mittels eines Radius und der andere Übergang mittels einer Geraden gebildet ist.

Es weisen einige der Ausnehmungen 16 im Uhrzeigersinn betrachtet auf ihrer linken Seite eine größere Steigung auf als auf ihrer rechten Seite, wohingegen einige der Ausnehmungen 16 im Uhrzeigersinn betrachtet auf ihrer rechten Seite eine größere Steigung aufweisen, als auf ihrer linken Seite. Dabei sind die unterschiedlichen Ausnehmungen jeweils spiegelbildlich zueinander, d.h. es existieren nur zwei unterschiedliche Formen der Ausnehmungen 16. Besonders zu bevorzugen ist es, dass die Form und die Anordnung der Ausnehmungen 16 derart erfolgt, dass diese punktsymmetrisch zur Mitte der Bohrung 8 ist. Unter anderem weist die Bohrung 8 in diesem Zusammenhang eine geradzahlige Anzahl an Ausnehmungen 16 auf. Des Weiteren sind die Ausnehmungen 16, die im Uhrzeigersinn betrachtet auf der linken Seite eine größere Steigung aufweisen als auf der rechten Seite und die Ausnehmungen 16, die im Uhrzeigersinn betrachtet auf der rechten Seite eine größere Steigung aufweisen als auf der linken Seite, einander abwechselnd vorgesehen. Die Ausnehmungen 16 weisen dabei jeweils einen gleichen Abstand voneinander auf. Da es sich im vorliegenden Fall um insgesamt 12 Ausnehmungen 16 handelt, sind diese jeweils um einen Winkel von 30 Grad zueinander versetzt angeordnet. Dabei sind die einzelnen Ausnehmungen 16 selbstverständlich nicht symmetrisch, sondern weisen, wie oben erläutert, auf ihren beiden Seiten unterschiedliche Steigungen auf.

## Patentansprüche

1. Rotor (3) für einen permanenterregten, wechselstrombetriebenen Elektromotor (1) mit einer Rotorwelle (4) und mit einem Rotorblechpaket (5), das Rotorbleche (7) aufweist, wobei die Rotorbleche (7) eine Bohrung (8) zur Aufnahme der Rotorwelle (4) aufweisen, wobei die Bohrung (8) an ihrem Umfang mehrere Ausnehmungen (16) aufweist, wobei die Ausnehmungen (16) hügelartig ausgebildet sind und an ihrer von der Mitte der Bohrung (8) entferntesten Stelle einen Radius (18) aufweisen, wobei die Übergänge von dem Radius (18) zu dem Umfang der Bohrung (8) auf beiden Seiten der Ausnehmungen (16) unterschiedlich große Steigungen aufweisen, wobei einige der Ausnehmungen (16) im Uhrzeigersinn betrachtet auf der linken Seite eine größere Steigung aufweisen als auf der rechten Seite, wobei einige der Ausnehmungen (16) im Uhrzeigersinn betrachtet auf der rechten Seite eine größere Steigung aufweisen als auf der linken Seite, wobei die Bohrung (8) eine geradzahlige Anzahl an Ausnehmungen (16) aufweist, wobei die Ausnehmungen (16), die im Uhrzeigersinn betrachtet auf der linken Seite eine größere Steigung aufweisen als auf der rechten Seite, und die Ausnehmungen (16), die im Uhrzeigersinn betrachtet auf der rechten Seite eine größere Steigung aufweisen als auf der linken Seite, einander abwechselnd vorgesehen sind, wobei zwischen der Rotorwelle (4) und dem Rotorblechpaket (5) ein Isoliermaterial (17) angeordnet ist, und wobei die Rotorwelle (4) zur Verbindung zwischen derselben und dem Rotorblechpaket (5) schraubenartig um den Umfang derselben verlaufende Erhöhungen aufweist, und wobei zwölf Ausnehmungen (16) vorgesehen sind, die jeweils um einen Winkel von 30° zueinander versetzt angeordnet sind.

2. Permanentmagneterregter, wechselstrombetriebener Elektromotor (1) mit einem Stator (2) und mit einem Rotor (3) nach Anspruch 1.

## Claims

1. Rotor (3) for a permanently excited, alternating current-powered electric motor (1) having a rotor shaft (4) and a rotor laminated core (5), which has rotor laminations (7), the rotor laminations (7) having a bore (8) for receiving the rotor shaft (4), the bore (8) having several recesses (16) on its circumference, the recesses (16) being hill-like in shape and having a radius (18) at their point furthest from the centre of the bore (8), the transitions from the radius (18) to the circumference of the bore (8) having different inclinations on both sides of the recesses (16), some of the recesses (16) viewed clockwise having a greater inclination on the left side than on the right side, some of the recesses (16) viewed clockwise having a greater inclination on the right side than on the left side, the bore (8) having an even number of recesses (16), the recesses (16) which, viewed clockwise, have a greater inclination on the left side than on the right side, and the recesses (16) which, viewed clockwise, have a greater inclination on the right side than on the left side, being provided alternately, an insulating material (17) being arranged between the rotor shaft (4) and the rotor laminated core (5), wherein the rotor shaft (4) has screw-like elevations extending around its circumference for connection between it and the rotor laminated core (5), and wherein twelve recesses (16) are provided, each offset from the other by an angle of 30°.

2. Permanently magnet-excited, alternating current-powered electric motor (1) having a stator (2) and a rotor (3) according to claim 1.

## Revendications

1. Rotor (3) pour un moteur électrique (1) à excitation permanente, alimenté en courant alternatif, comprenant un arbre de rotor (4) et un paquet de tôles de rotor (5), lequel comprend des tôles de rotor (7), les tôles de rotor (7) présentant un perçage (8) destiné à recevoir l'arbre de rotor (4), le perçage (8) présentant sur sa circonférence plusieurs évidements (16), les évidements (16) étant en forme de colline et présentant, à leur point le plus éloigné du centre du perçage (8), un rayon (18), les transitions du rayon (18) à la circonférence du perçage (8) présentant, de chaque côté des évidements (16), des pentes de tailles différentes, certains des évidements (16) présentant, considérés dans le sens horaire, sur le côté gauche une pente plus grande que sur le côté droit, certains des évidements (16) présentant, considérés dans le sens horaire, sur le côté droit une pente plus grande que sur le côté gauche, le perçage (8) présentant un nombre pair d'évidements (16), les évidements (16) qui, considérés dans le sens horaire, présentent sur le côté gauche une pente plus grande que sur le côté droit, et les évidements (16) qui, considérés dans le sens horaire, présentent sur le côté droit une pente plus grande que sur le côté gauche, étant prévus en alternance, un matériau isolant (17) étant disposé entre l'arbre de rotor (4) et le paquet de tôles de rotor (5), et l'arbre de rotor (4) présentant, pour la connexion entre celui-ci et le paquet de tôles de rotor (5), des saillies en forme de vis s'étendant autour de sa circonférence, et douze évidements (16) étant prévus, lesquels sont chacun disposés de manière décalée les uns par rapport aux autres selon un angle de 30°.

2. Moteur électrique (1) à excitation permanente, alimenté en courant alternatif, comprenant un stator (2) et un rotor (3) selon la revendication 1.
